# EUROPÄISCHE PATENTSCHRIFT

(11) **EP 1 048 867 B1**
(45) Veröffentlichungstag und Bekanntmachung des Hinweises auf die Patenterteilung: **17.05.2006**
(21) Anmeldenummer: 00108710.5
(22) Anmeldetag: 22.04.2000
(51) Int. Cl.: F16D 25/0638, F16D 25/12

(54) **Hydraulisch betätigbare Kupplung**
Hydraulically actuated clutch
Embrayage à commande hydraulique

(30) Priorität: 30.04.1999 DE 19919780
(43) Veröffentlichungstag der Anmeldung: 02.11.2000
(73) Patentinhaber: ZF FRIEDRICHSHAFEN Aktiengesellschaft, 88038 Friedrichshafen (DE)
(72) Erfinder: Lehle, Hubert, 88074 Meckenbeuren (DE)

(56) Entgegenhaltungen:
- DE-A- 19 821 164
- DE-A- 19 850 132
- US-A- 3 863 746
- US-A- 4 732 253
- US-A- 4 966 270

## Beschreibung

Hydraulisch betätigbare Kupplungen werden vorzugsweise in Getrieben zum kraftschlüssigen Verbinden der Antriebswelle über verschiedene Getriebestufen mit der Abtriebswelle verwendet. Häufig wird die Kupplung im Schließsinne betätigt, indem die Betätigungseinrichtung der Kupplung mit Druckmittel beaufschlagt wird und somit die Betätigungseinrichtung eine Kraft auf Druckstücke ausübt, welche die Lamellen der Kupplung zusammenpressen und somit mit der Kupplung verbundene Wellen kraftschlüssig verbindet. Wird die Betätigungseinrichtung dieser Kupplung drucklos geschaltet, so wird die Kupplung im Öffnungssinne betätigt, indem Federn den Kolben der Betätigungseinrichtung zurückdrücken. Damit gewährleistet ist, daß im geöffneten Zustand der Kupplung keinerlei Restkraft mehr auf die Lamellen der Kupplung wirkt, ist es erforderlich, die Druckstücke fest mit der Betätigungseinrichtung zu verbinden, damit die Betätigungseinrichtung im drucklosen Zustand die Druckstücke so hält, daß die Druckstücke keine Restkraft auf die Kupplung ausüben können. Dies ist vor allem der Fall, wenn sich die der Kupplung abgewandte Seite der Druckstücke in einem Raum befindet, in welchem sich Druckflüssigkeit befindet, welche den drehzahlabhängigen Kräften der Betätigungseinrichtung entgegenwirkt. Dieser Druck, welcher den drehzahlabhängigen Kräften der Betätigungseinrichtung entgegenwirkt, wirkt somit auch auf die Fläche des Druckstücks, welche somit eine Kraft auf die Kupplung ausübt. Ist jedoch das Druckstück mit dem Kolben der Betätigungseinrichtung fest verbunden oder einstückig mit diesem ausgebildet, ist es nicht möglich, durch Druckflüssigkeit, welche in den Raum geleitet wird, in dem sich die Druckstücke befinden, die drehzahlabhängigen Kräfte der Betätigungseinrichtung vollständig zu kompensieren, da, indem die Druckstücke mit der Betätigungseinrichtung fest verbunden oder einstückig ausgebildet sind und somit die Fläche, auf welche die Druckflüssigkeit wirkt, um den drehzahlabhängigen Kräften entgegenzuwirken, kleiner ist als die Fläche, auf welche die Druckflüssigkeit wirkt und die drehzahlabhängigen Kräfte der Betätigungseinrichtung erzeugt.

Die DE 198 21 164 A1 und die US 4,732,253 offenbaren eine hydraulisch betätigbare Kupplung mit einer Betätigungseinrichtung, welche einen Kolben aufweist, welcher einstückig mit einem Druckstück ausgeführt ist, um beim Druckbeaufschlagen des Kolbens über das Druckstück die Kupplung im Schließsinne zu betätigen. Eine Tellerfeder stützt sich an einem ortsfesten Bauteil ab und drückt so auf den Kolben, dass dieser beim Drucklosschalten der Betätigungseinrichtung in seiner Ausgangsstellung zurückverschoben wird und dadurch das einstückig mit dem Kolben ausgeführte Druckstück ebenfalls zurückzieht, um die Kupplung im Öffnungssinne zu betätigen.

Der vorliegenden Erfindung liegt daher die Aufgabe zugrunde, eine hydraulisch betätigbare Kupplung zu schaffen, bei welcher Druckstücke, welche Kräfte von einer Betätigungseinrichtung auf Lamellen einer Kupplung übertragen, im drucklosen Zustand der Betätigungseinrichtung keine Kräfte auf die Lamellen der Kupplung ausüben. Vorzugsweise ist die Betätigungseinrichtung dergestalt auszuführen, dass keine drehzahlabhängigen Kräfte entstehen.

Die Aufgabe wird mit einer, auch die kennzeichnenden Merkmale des Hauptanspruchs aufweisenden, gattungsgemäßen, hydraulisch betätigbaren Kupplung gelöst.

Erfindungsgemäß wird im druckbeaufschlagten Zustand der Betätigungseinrichtung die Kraft der Betätigungseinrichtung über Druckstücke auf eine Lamellenkupplung übertragen und diese im Schließsinne betätigt. Im drucklosen Zustand wird die Betätigungseinrichtung über eine Tellerfeder in ihren Ausgangszustand zurückgedrückt und die Lamellenkupplung im Öffnungssinne betätigt. Die Druckstücke sind dergestalt mit der Tellerfeder verbunden, dass im druckbeaufschlagten Zustand der Betätigungseinrichtung die Druckstücke die Kraft der Betätigungseinrichtung auf die Kupplungslamellen übertragen und somit die Kupplung im Schließsinne betätigen. Dabei sind die Druckstücke jedoch nur so mit der Betätigungseinrichtung verbunden, daß im drucklosen Zustand der Betätigungseinrichtung die Druckstücke die Fläche nicht verringern, welche mit Druckflüssigkeit bedeckt ist und somit den drehzahlabhängigen Kräften der Betätigungseinrichtung entgegenwirkt. Im drucklosen Zustand drückt eine Tellerfeder die Betätigungseinrichtung in ihre Ausgangsposition zurück, so daß die Kupplung im Öffnungssinne betätigt wird. Die Druckstücke sind dergestalt mit der Tellerfeder verbunden, daß die Druckstücke ebenfalls von der Kupplung zurückgezogen und in dieser Position gehalten werden. Dadurch ist gewährleistet, daß von den Druckstücken keinerlei Restkräfte mehr auf die Kupplungslamellen wirken. Befinden sich die Druckstücke, die Tellerfeder und eine Seite eines Kolbens der Betätigungseinrichtung in einem Raum, in welchem sich Druckflüssigkeit befindet, welche den drehzahlabhängigen Kräften der Betätigungseinrichtung entgegenwirkt, so wird durch die Verbindung der Druckstücke mit der Tellerfeder gewährleistet, daß die Kraft, welche aus der Druckflüssigkeit entsteht, welche den drehzahlabhängigen Kräften der Betätigungseinrichtung entgegenwirkt und auf die Fläche der Druckstücke wirkt, sich über die Verbindung der Druckstücke mit der Tellerfeder auf der Tellerfeder abstützt und somit keinerlei Kräfte im drucklosen Zustand der Betätigungseinrichtung auf die Kupplungslamellen der Kupplung übertragen werden können. Indem die Druckstücke mit der Tellerfeder verbunden sind und nur im druckbeaufschlagten Zustand der Betätigungseinrichtung an der Betätigungseinrichtung anliegen, ist gewährleistet, daß die drehzahlabhängigen Kräfte der Betätigungseinrichtung vollständig kompensiert sind, da die Druckflüssigkeit, welche den drehzahlabhängigen Kräften der Betätigungseinrichtung entgegenwirkt, auf eine ebenso große Fläche wirkt, wie die drehzahlabhängigen Kräfte der Betätigungseinrichtung. Vorzugsweise befinden sich in der Tellerfeder radiale Öffnungen, in welche die Druckstücke eingehängt werden können. Tellerfedern mit radialen Öffnungen werden häufig verwendet, um eine flache Federkennlinie zu erreichen. Befinden sich die Druckstücke in Richtung des radial inneren Durchmessers der Tellerfeder, so sind die radialen Öffnungen der Tellerfeder vom inneren Durchmesser aus anzubringen. Befinden sich die Druckstücke in Richtung des radial äußeren Durchmessers der Tellerfeder, so sind die radialen Öffnungen der Tellerfeder vom äußeren Durchmesser aus anzubringen. Verwendet man spezielle Druckstücke, so können Tellerfedern mit radialen Öffnungen, welche als Standard-Bauteile auch in anderen Anwendungen Verwendung finden, verwendet werden, indem die speziellen Druckstücke einen in Richtung Betätigungseinrichtung weisenden Bereich aufweisen, welcher in seiner radialen Erstreckung größer ist als die radialen Ausnehmungen der Tellerfedern. Dadurch liegt dieser letzte Bereich des Druckstücks an der Tellerfeder an und die Druckstücke können im drucklosen Zustand der Betätigungseinrichtung von der Tellerfeder der Kupplung zurückgezogen werden. Wird das Druckmittel, welches den drehzahlabhängigen Kräften der Betätigungseinrichtung entgegenwirkt, aus einer Leitung, in welcher sich ebenfalls das Kühl- und Schmiermittel der Lamellen der Kupplung befindet, zugeführt, so ist es vorteilhaft, den Raum, in welchem sich die Druckflüssigkeit befindet, welche den drehzahlabhängigen Kräften der Betätigungseinrichtung entgegenwirkt, geschlossen auszubilden, um einen permanenten Abfluß von Kühl- und Schmiermittel zu verhindern. Um die Kupplung mit ihrer Betätigungseinrichtung kompakt auszuführen, ist es vorteilhaft, in diesen geschlossenen Raum die Druckstücke und die Tellerfeder zu integrieren. Wird die Betätigungseinrichtung mit Druck beaufschlagt und wird ein geschlossener Raum für die Druckflüssigkeit, welche den drehzahlabhängigen Kräften der Betätigungseinrichtung entgegenwirkt, verwendet, so wird aus diesem Raum immer dann Druckflüssigkeit in die Leitung, welche zur Schmierung und Kühlung der Lamellen verwendet wird, zugeführt, wenn die Betätigungseinrichtung mit Druck beaufschlagt wird. Somit fließt Druckflüssigkeit aus dem Raum, in welchem sich Druckflüssigkeit befindet, welche den drehzahlabhängigen Kräften der Betätigungseinrichtung entgegenwirkt, nur dann zu oder ab, wenn die Betätigungseinrichtung mit Druck beaufschlagt oder drucklos geschaltet wird. Soll eine Kupplungseinheit verwendet werden, bei welcher eine erste Kupplung ein erstes Antriebsteil mit einem Abtriebsteil verbindet und eine zweite Kupplung ein zweites Antriebsteil mit demselben Abtriebsteil verbindet, so ist es möglich, die Betätigungseinrichtungen mit den Druckstücken und den Tellerfedern radial übereinander auszuführen und somit axialen Bauraum zu gewinnen. Hierbei werden in der radial äußeren Betätigungseinrichtung Tellerfedern mit radialen Öffnungen, welche von dem inneren radialen Durchmesser ausgehen, und in der inneren radialen Betätigungseinrichtung Tellerfedern mit radialen Öffnungen, welche von dem äußeren radialen Durchmesser ausgehen, verwendet. Dadurch kann eine sehr kompakte Kupplungseinheit geschaffen werden, bei welcher alle drehzahlabhängigen Kräfte kompensiert sind und im drucklos geschalteten Zustand der Betätigungseinrichtungen keinerlei Kräfte von den Druckstücken auf die Kupplungen übertragen werden können.

Weitere Ausgestaltungsmöglichkeiten sind in der Figuren-Beschreibung erläutert.

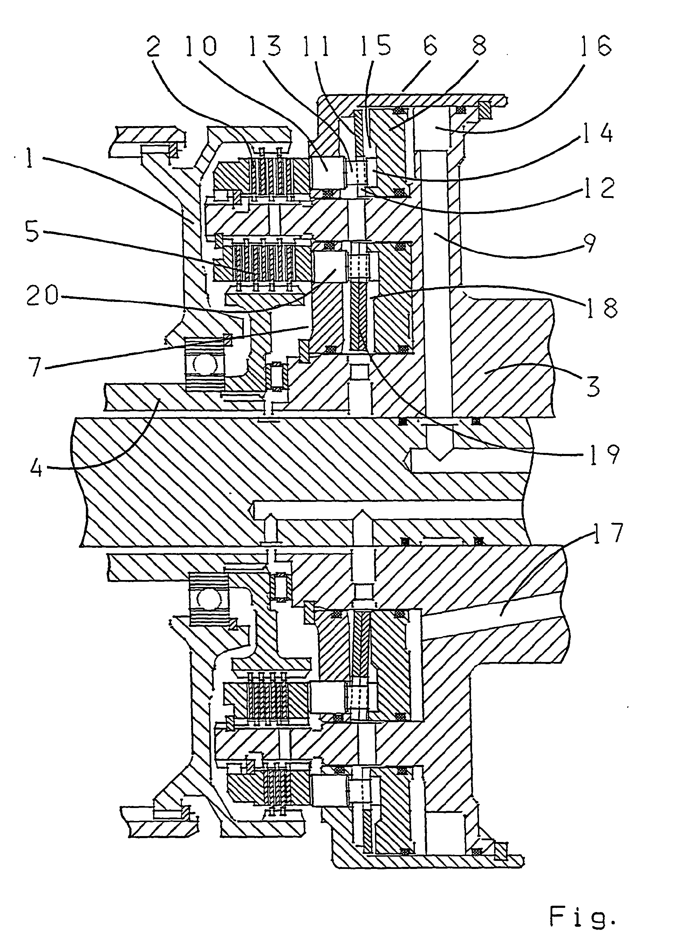

Die einzige Figur zeigt eine hydraulisch betätigbare Kupplungseinheit, bei welcher die Druckstücke so mit den Tellerfedern verbunden sind, daß sie im drucklosen Zustand der Betätigungseinrichtungen keine Kräfte auf die Lamellen der Kupplungen ausüben können.

Ein erstes Antriebsteil 1 kann über eine Kupplung 2 mit einem Abtriebsteil 3 verbunden werden. Ein zweites Antriebsteil 4 kann über eine Kupplung 5 mit einem Abtriebsteil 3 verbunden werden. über die Betätigungseinrichtung 6 kann die Kupplung 2 geöffnet bzw. geschlossen werden, über die Betätigungseinrichtung 7 kann die Kupplung 5 geöffnet bzw. geschlossen werden. In der Betätigungseinrichtung 6 befindet sich ein Kolben 8, welcher sich bei Druckbeaufschlagung durch die Zuführung 9 axial so verschiebt, daß er an einem oder mehreren Druckstücken 10 zur Anlage kommt und dieses Druckstück 10 axial so verschiebt, daß die Kupplung 2 gegen die Federkraft der Feder 11 im Schließsinne betätigt wird. In der Tellerfeder 11 befinden sich radiale Öffnungen 12, um eine flache Kennlinie der Tellerfeder zu erhalten. Das Druckstück 10 ist in einem Bereich 13 in die Öffnung 12 der Tellerfeder 11 eingelegt. Wird die Betätigungseinrichtung 6 drucklos geschaltet, so drückt die Tellerfeder 11 den Kolben 8 in seine Ausgangsposition zurück und da das Druckstück 10 einen Bereich 14 aufweist, welcher in seiner radialen Erstreckung größer ist als die der Öffnungen 12, wird das Druckstück 10 über die Tellerfeder 11 ebenfalls zurückgezogen. Im drucklosen Zustand der Betätigungseinrichtung 6 liegt das Druckstück 10 über seinen Bereich 14 an der Tellerfeder 11 an und die Tellerfeder 11 drückt den Kolben 8 so weit zurück, daß dieser sich in seiner Ausgangsposition befindet. In dieser Position liegt das Druckstück 10 nicht mehr an dem Kolben 8 an, so daß das Druckmittel, welches sich in dem Raum 15 befindet, auf dieselbe Fläche des Kolbens 8 wirkt, wie das Druckmittel, welches sich im Raum 16 befindet. Somit heben sich die drehzahlabhängigen Kräfte, welche auf den Kolben 8 wirken, gegenseitig vollständig auf. Die drehzahlabhängigen Kräfte aus der Druckflüssigkeit, welche sich im Raum 15 befinden und auf das Druckstück 10 wirken, stützen sich über den Bereich 14 des Druckstücks 10 an der Tellerfeder 11 ab. Der Raum 15 weist nur Öffnungen auf, welche mit einer Zuführung 17 in Verbindung stehen, durch welche die Lamellen der Kupplungen 2 und 5 geschmiert und gekühlt werden. Ansonsten ist der Raum 15 geschlossen ausgeführt. Somit wird verhindert, daß aus dem Raum 15 Kühl- und Schmiermittel der Lamellen permanent abfließt und somit den Kupplungen nur noch eine verringerte Kühl- und Schmiermenge zur Verfügung steht. Die Betätigungseinrichtung 7 weist einen vergleichbaren Aufbau auf. Durch Druckbeaufschlagen der Betätigungseinrichtung 6 oder 7 wird Druckflüssigkeit aus dem Raum 15 oder 18 zusätzlich in die Zuführung 17 geschoben, so daß beim Schließen der Kupplungen 2 oder 5 zusätzliches Kühl-oder Schmiermittel zur Verfügung steht. Durch die Verwendung eines bis auf die Druckmittelzuführung geschlossenen Raumes 15 besteht zusätzlich die Möglichkeit, in dem Raum 15 einen geregelten Gegendruck zu erzeugen, welcher dem Betätigungsdruck im Raum 16 entgegenwirkt und über welchen somit ein geregeltes Drehmoment an der Kupplung 2 erzeugt werden kann. Indem die Kupplungen 2 und 5 sowie die Betätigungseinrichtungen 6 und 7 im gleichen axialen Bereich, jedoch radial übereinander, angeordnet sind, kann die Kupplungseinheit sehr kompakt ausgeführt werden. Durch die Verwendung von Tellerfedern 11 und 19, welche radiale Öffnungen aufweisen, und Druckstücken 10 und 20, welche in diese Öffnungen eingehängt werden, kann eine hydraulisch betätigte Kupplung geschaffen werden, bei welcher im drucklosen Zustand keinerlei Kräfte auf die Kupplung wirken und die Kupplung sich durch die Verwendung von sehr wenig Bauteilen auszeichnet.

### Bezugszeichen

- 1: erstes Antriebsteil
- 2: Kupplung
- 3: Abtriebsteil
- 4: zweites Antriebsteil
- 5: Kupplung
- 6: Betätigungseinrichtung
- 7: Betätigungseinrichtung
- 8: Kolben
- 9: Zuführung
- 10: Druckstück
- 11: Feder
- 12: Öffnung
- 13: Bereich
- 14: Bereich
- 15: Raum
- 16: Raum
- 17: Zuführung
- 18: Raum
- 19: Feder
- 20: Druckstück

## Patentansprüche

1. Hydraulisch betätigbare Kupplung (2, 5), welche durch Druckbeaufschlagung einer Betätigungseinrichtung (6, 7) mit einem Kolben (8) gegen eine Federkraft, mindestens einer Tellerfeder (11, 19) über mindestens ein Druckstück (10, 20), geschlossen wird und durch Drucklosschalten einer Betätigungseinrichtung (6, 7) geöffnet wird, **dadurch gekennzeichnet, dass** der Kolben (8) und das Druckstück (10,20) mehrstückig ausgebildet sind, und jedes Druckstück (10, 20) dergestalt direkt mit mindestens einer Tellerfeder (11, 19) verbunden ist, dass im drucklosen Zustand der Betätigungseinrichtung (6, 7) keine Kraft von Druckstück auf die Kupplung (2, 5) ausgeübt wird.

2. Hydraulisch betätigbare Kupplung nach Anspruch 1, **dadurch gekennzeichnet, daß** mindestens eine Tellerfeder (11, 19) mindestens eine radiale Öffnung (12) aufweist, über welche das Druckstück (10, 20) mit der Tellerfeder (11, 19) verbindbar ist.

3. Hydraulisch betätigbare Kupplung nach Anspruch 2, **dadurch gekennzeichnet, daß** jedes Druckstück (10, 20) einen Bereich (14) aufweist, welcher zwischen einer Betätigungseinrichtung (6, 7) und einer Tellerfeder (11, 19) angeordnet und welcher in seiner radialen Erstreckung größer ausgeführt ist, als die radialen Öffnungen (12) der Tellerfeder (11, 19), über welche jedes Druckstück (10, 20) mit der Tellerfeder (11, 19) verbunden ist.

4. Hydraulisch betätigbare Kupplung nach Anspruch 1, **dadurch gekennzeichnet, daß** die Tellerfeder (11, 19) und jedes Druckstück (10, 20) in einem Raum (15, 18) angeordnet ist, in welchem sich Druckflüssigkeit befindet, welche den drehzahlabhängigen Kräften der Betätigungseinrichtung entgegenwirkt.

5. Hydraulisch betätigbare Kupplung nach Anspruch 4, **dadurch gekennzeichnet, daß** der Raum (15, 18), in welchem sich Druckflüssigkeit befindet, welche den drehzahlabhängigen Kräften der Betätigungseinrichtung (6, 7) entgegenwirkt, auf einer Seite durch eine Fläche eines Kolbens (8) der Betätigungseinrichtung (6, 7) begrenzt wird, und diese Fläche dieselbe Erstreckung aufweist wie die Fläche am Kolben (8) der Betätigungseinrichtung (6, 7), welche mit Druckmittel beaufschlagbar ist, um die Kupplung (2, 5) zu betätigen.

6. Hydraulisch betätigbare Kupplung nach Anspruch 1, **dadurch gekennzeichnet, daß** mehrere Kupplungen (2, 5) übereinander angeordnet sind.

7. Hydraulisch betätigbare Kupplung nach Anspruch 4, **dadurch gekennzeichnet, daß** durch Druckbeaufschlagung der Betätigungseinrichtung (6, 7) die Druckflüssigkeit, welche den drehzahlabhängigen Kräften der Betätigungseinrichtung (6, 7) entgegenwirkt, immer dann einem Druckflüssigkeitsvolumen zugeführt wird, welches zur Schmierung und Kühlung verwendet wird, wenn die Betätigungseinrichtung (6, 7) der Kupplung (2, 5) betätigt wird.

8. Hydraulisch betätigbare Kupplung nach Anspruch 4, **dadurch gekennzeichnet, daß** Druckmittel in den Raum (15, 18), in welchem sich Druckflüssigkeit befindet, um den drehzahlabhängigen Kräften der Betätigungseinrichtung (6, 7) entgegenzuwirken, nur während einer axialen Bewegung eines Kolbens (8) der Betätigungseinrichtung (6, 7) zu- oder abfließt.

## Claims

1. Hydraulically operated clutch (2, 5), which is closed by pressurising an actuator mechanism (6, 7) incorporating a piston (8) against a spring force of at least one plate spring (11, 19) via at least one thrust piece(10, 20) and which is opened by switching an actuator mechanism (6, 7) to no-pressure mode, **characterised in that** the piston (8) and the thrust piece (10, 20) are of a multi-part design and each thrust piece (10, 20) is designed to be connected directly to at least one plate spring (11, 19) and when the actuator mechanism (6, 7) is in the no-pressure state, no force is exerted on the clutch (2,5) by the thrust piece.

2. Hydraulically operated clutch as claimed in claim 1, **characterised in that** at least one plate spring (11, 19) has at least one radial orifice (12) by means of which the thrust piece (10, 20) can be connected to the plate spring (11, 19).

3. Hydraulically operated clutch as claimed in claim 2, **characterised in that** each thrust piece (10, 20) has a region (14) disposed between an actuator mechanism (6, 7) and a plate spring (11, 19) and which is designed to be bigger in its radial extension than the radial orifices (12) of the plate springs (11, 19) by means of which each thrust piece (10, 20) is connected to the plate spring (11, 19).

4. Hydraulically operated clutch as claimed in claim 1, **characterised in that** the plate spring (11, 19) and every thrust piece (10, 20) is disposed in a chamber (15, 18) in which pressurised fluid is disposed, which counteracts the speed-dependent forces of the actuator mechanism.

5. Hydraulically operated clutch as claimed in claim 4, **characterised in that** the chamber (15, 18), in which pressurised fluid counteracting the speed-dependent forces of the actuator mechanism (6, 7) is disposed, is bounded by a surface of a piston (8) of the actuator mechanism (6, 7) at one end and this surface has the same extension as the surface on the piston (8) of the actuator mechanism (6, 7) to which pressurising medium is applied in order to actuate the clutch (2, 5).

6. Hydraulically operated clutch as claimed in claim 1, **characterised in that** several clutches (2, 5) are disposed one above the other.

7. Hydraulically operated clutch as claimed in claim 4, **characterised in that**, when pressure is applied to the actuator mechanism (6, 7), the pressurised fluid countering the speed-dependent forces of the actuator mechanism (6, 7) is delivered to a compressed fluid volume used for lubricating and cooling purposes whenever the actuator mechanism (6, 7) of the clutch (2, 5) is activated.

8. Hydraulically operated clutch as claimed in claim 4, **characterised in that** pressurised medium does not flow into or out of the chamber (15, 18) in which pressurised fluid is disposed as a means of countering the speed-dependent forces of the actuator mechanism (6, 7) except during an axial displacement of a piston (8) of the actuator mechanism (6, 7).

## Revendications

1. Embrayage à actionnement hydraulique (2, 5) qui est fermé par une sollicitation de pression d'un dispositif d'actionnement (6, 7) comprenant un piston (8), agissant à l'encontre d'une force élastique d'au moins un ressort disque (11, 19) par l'intermédiaire d'au moins une pièce de pression (10, 20) et qui est ouvert par la mise hors pression d'un dispositif d'actionnement (6, 7), **caractérisé en ce que** le piston (8) et la pièce de pression (10, 20) sont réalisés en plusieurs pièces et que chaque pièce de pression (10, 20) est directement reliée à au moins un ressort disque (11, 19) de telle manière qu'à l'état sans pression du dispositif d'actionnement (6, 7) aucune force ne soit exercée sur l'embrayage (2, 5) par la pièce de pression.

2. Embrayage à actionnement hydraulique selon la revendication 1, **caractérisé en ce qu'**au moins un ressort disque (11, 19) comporte au moins une ouverture radiale (12) au moyen de laquelle la pièce de pression (10, 20) peut être reliée au ressort disque (11, 19).

3. Embrayage à actionnement hydraulique selon la revendication 2, **caractérisé en ce que** chaque pièce de pression (10, 20) comporte une région (14) qui est disposée entre un dispositif d'actionnement (6, 7) et un ressort disque (11, 19) et qui est plus grande en extension radiale que les ouvertures radiales (12) du ressort disque (11, 19) au moyen desquelles chaque pièce de pression (10, 20) est reliée au ressort disque (11, 19).

4. Embrayage à actionnement hydraulique selon la revendication 1, **caractérisé en ce que** le ressort disque (11, 19) et chaque pièce de pression (10, 20) sont disposés dans une chambre (15, 18) dans laquelle se trouve un liquide de pression qui s'oppose aux forces du dispositif d'actionnement qui sont fonction de la vitesse de rotation.

5. Embrayage à actionnement hydraulique selon la revendication 4, **caractérisé en ce que** la chambre (15, 18) dans laquelle se trouve un liquide de pression qui s'oppose aux forces du dispositif d'actionnement (6, 7) qui sont fonction de la vitesse de rotation est limitée d'un côté par une face d'un piston (8) du dispositif d'actionnement (6, 7) et cette face présente la même extension que la face du piston (8) du dispositif d'actionnement (6, 7) qui peut être sollicitée par un milieu de pression pour actionner l'embrayage (2, 5).

6. Embrayage à actionnement hydraulique selon la revendication 1, **caractérisé en ce que** plusieurs embrayages (2, 5) sont disposés l'un au-dessus de l'autre.

7. Embrayage à actionnement hydraulique selon la revendication 4, **caractérisé en ce que**, sous l'effet d'une sollicitation de pression du dispositif d'actionnement (6, 7), le liquide de pression qui s'oppose aux forces du dispositif d'actionnement (6, 7) qui sont fonction de la vitesse de rotation est toujours amené à un volume de liquide de pression qui est utilisé pour la lubrification et le refroidissement lorsque le dispositif d'actionnement (6, 7) de l'embrayage (2, 5) est actionné.

8. Embrayage à actionnement hydraulique selon la revendication 4, **caractérisé en ce que** le milieu de pression s'écoule dans la chambre (15, 18) dans laquelle le liquide de pression se trouve pour s'opposer aux forces du dispositif d'actionnement (6, 7) qui sont fonction de la vitesse de rotation, ou s'en écoule, uniquement pendant un mouvement axial d'un piston (8) du dispositif d'actionnement (6, 7).
